# EUROPÄISCHE PATENTSCHRIFT

(11) **EP 1 892 160 B1**
(45) Veröffentlichungstag und Bekanntmachung des Hinweises auf die Patenterteilung: **14.05.2014**
(21) Anmeldenummer: 07016613.7
(22) Anmeldetag: 24.08.2007
(51) Int. Cl.: B60R 21/16

(54) **Verfahren und Vorrichtung zum Befestigen eines Airbags an einem Kraftfahrzeug**
Method and device for fitting an airbag on a motor vehicle
Procédé et dispositif destinés à la fixation d'un airbag sur un véhicule automobile

(30) Priorität: 26.08.2006 DE 102006040041
(43) Veröffentlichungstag der Anmeldung: 27.02.2008
(73) Patentinhaber: GM Global Technology Operations LLC, Detroit, MI 48265-3000 (US)
(72) Erfinder: Diehl, Johannes, 55291 Saulheim (DE); Grube, Mathias, 65428 Rüsselsheim (DE); Thilow, Dagmar, 65428 Rüsselsheim (DE)
(74) Vertreter: Weber, Almut

(56) Entgegenhaltungen:
- EP-A- 1 057 697
- FR-A- 2 823 264
- US-A- 1 768 505
- US-A- 2 303 148
- US-A1- 2006 061 075

## Beschreibung

Die Erfindung betrifft Verfahren zum Befestigen eines Airbags an der Karosserie eines Kraftfahrzeugs. Die Erfindung betrifft ferner eine Airbag-Befestigungsanordnung, ein Airbag-Modul mit einer solchen Airbag-Befestigungsanordnung sowie ein Kraftfahrzeug.

Die Deutsche Patentanmeldung DE 10 2005 045 370 A1 beschreibt einen Dachseitenairbag mit mehreren Montagehalterungen. Die Montagehalterungen sind mit dem Fahrzeuginneren eines Kraftfahrzeugs verklipst oder mittels einer Schraube und einer Mutter am Kraftfahrzeug befestigt. Ein Vorteil der verklipsten Montagehalterung ist deren relativ einfache Montage.

Ein Nachteil der verklipsten Montagehalterung besteht allerdings darin, dass der Dachseitenairbag z.B. im Falle eines Austausches relativ schwer von dem Kraftfahrzeug entfernbar ist. Meist besteht beim Ausbauen die Gefahr, dass dadurch der Klipp oder die für den Klipp vorgesehene Öffnung in der Innenraumverkleidung des Kraftfahrzeugs beschädigt wird.

Insbesondere bei solchen Airbagkonstruktionen, die mit einer Vielzahl verschiedener Befestigungen und Halterungen an der Innenverkleidung bzw. Karosserie befestigt werden sollen, ist es zudem sehr wichtig, dass die Montage aus ökonomischer Sicht optimiert ausgeführt werden kann. Dazu gehört insbesondere eine sehr einfache Vormontage bzw. Vorfixierung der Befestigungsverbindungen, die auf einfache Weise auch wieder gelöst werden können, ohne dass der Airbag oder die entsprechende Innenverkleidung bzw. die Karosserie bei der Demontage zerstört oder beschädigt wird. Bei bekannten Montagehalterungen für Airbags, wie beispielsweise in der oben genannten DE 10 2005 045 370 A1, ist eine einfache Vormontage und auch wieder einfache, zerstörungsfreie Demontage nicht oder nur eingeschränkt möglich.

Vor diesem Hintergrund ist es eine Aufgabe der vorliegenden Erfindung, einen Airbag montagetechnisch möglichst einfach und dennoch sicher an einem Kraftfahrzeug zu befestigen. Vorzugsweise soll zudem ein möglichst einfacher späterer Austausch des Airbags möglich sein.

Erfindungsgemäß wird die oben genannte Aufgabe durch ein Verfahren mit den Merkmalen des Patentanspruchs 1 und/oder durch eine Airbag-Befestigungsanordnung mit den Merkmalen des Patentanspruchs 12 und/oder durch ein Airbag-Modul mit den Merkmalen des Patentanspruchs 18 und/oder durch einen Kraftfahrzeug mit den Merkmalen des Patentanspruchs 19 gelöst.

Demgemäß ist vorgesehen:

Ein Verfahren zum Befestigen eines Airbags an der Karosserie eines Kraftfahrzeugs, mit den Schritten: Bereitstellen einer Klippvorrichtung mit einer ersten Öffnung sowie mit Federelementen und Bereitstellen einer Befestigungsvorrichtung mit mindestens einer zweiten Öffnung, die eine Befestigungslasche eines mit einem Gas auffüllbaren Airbags einklemmt; Positionieren der Klippvorrichtung und der Befestigungsvorrichtung derart, dass die erste und die zweite Öffnung übereinander angeordnet sind; Durchstecken einer Schraube in die übereinander positionierten Öffnungen; Einklipsen der Federelemente in einen Abschnitt der Karosserie, welcher Ausnehmungen zur Aufnahme der Federelemente aufweist, welche im eingeklipsten Zustand über der ersten und zweiten Öffnung angeordnet ist; Aufspreizen der Federelemente durch abschließendes Einschrauben der Schraube in die Klippvorrichtung und/oder die Karosserie.

Eine Airbag-Befestigungsanordnung, mit einer Klippvorrichtung, die eine Bodenplatte aufweist, in der eine ein Schraubgewinde aufweisende erste Öffnung angeordnet ist und von der Federelemente abstehen, mit einer Befestigungsvorrichtung, die mindestens eine zweite öffnung aufweist und mittels der eine Befestigungslasche eines mit einem Gas auffüllbaren Airbags einklemmbar ist, mit einer Schraube, die in die übereinander positionierten ersten und zweiten Öffnungen durchgesteckt und in das Schraubgewinde eingeschraubt ist derart, daß die Federelemente aufgespreizt sind.

Ein Airbag-Modul in oder für ein Kraftfahrzeug, mit einem mit einem Gas auffüllbaren Airbag, der wenigstens eine von dem Airbag abstehende Befestigungslasche zur Befestigung des Airbags aufweist, mit wenigstens einer erfindungsgemäßen Airbag-Befestigungsanordnung, wobei die Befestigungslasche zum Befestigen des Airbags mittels einer Schraube an der Klippvorrichtung festgeschraubt ist.

Ein Kraftfahrzeug, mit einer Karosserie, mit einer Innenverkleidung zum Verkleiden der Karosserie, mit einem erfindungsgemäßen Airbag-Modul, wobei das Airbag-Modul mittels der Federelemente der Klippvorrichtung mit der Karosserie und/oder der Innenverkleidung verklipst ist und mittels der durch die Klippvorrichtung durch geschraubten Schraube an der Karosserie und/oder an der Innenverkleidung befestigt und fixiert ist.

Die vorliegende Erfindung beschreibt die Kombination eines Montageteiles, welches einen Gewindedurchzug und ein Federelement aufweist und welches in einem definierten Formloch in der Karosserie oder der Innenverkleidung eines Kraftfahrzeugs montiert werden kann, mit einem Befestigungselement, welches eine Befestigungslasche eines Airbags einklemmt und damit fixiert. Das Montageteil mit Gewindedurchzug und Federelement enthält federelastische Bügel, die von einer Bodenplatte der Klippvorrichtung abstehen. Nach dem Einklipsen dieser federelastischen Bügel in eigens dafür vorgesehene Ausnehmungen in der Karosserie bzw. der Innenverkleidung wird eine Schraube durch die Befestigungslasche und den Gewindedurchzug in der Bodenplatte der Klippvorrichtung durchgesteckt und dort eingeschraubt, wobei durch weiteres Einschrauben sich das Federelement innerhalb dieser Ausnehmungen der Karosserie bzw. der Innenverkleidung aufspreizt und damit die gesamte Befestigungskonstruktion zur Befestigung des Airbags fest an der Karosserie bzw. der Innenverkleidung fixiert. Damit kann die Klippvorrichtung und damit auch die über die Befestigungsvorrichtung daran angeschraubte Befestigungslasche nicht mehr ohne ein Lösen der Schraube aus der Karosserie bzw. der Innenverkleidung entfernt werden.

Die vorliegende Erfindung beschreibt somit ein federelastisches Klippbauteil, welches in die Karosserie eingeklipst wird, mit einer Befestigungsvorrichtung zum Einklemmen und Befestigen eines Airbags, die ein zusätzliches Befestigungselement im Bereich der Karosserie bzw. der Innenverkleidung entbehrlich machen. Zudem ermöglichen sie eine sehr sichere Verschraubung auch in sehr dünne Bleche der Karosserie.

Schließlich ist die gesamte Konstruktion auf sehr einfache Weise wieder im Rahmen einer Demontage trennbar, so dass ein Ersetzen durch einen Ersatzairbag sehr einfach möglich ist.

Vorteilhafte Ausgestaltungen und Weiterbildungen der Erfindung ergeben sich aus den weiteren Unteransprüchen sowie aus der Beschreibung unter Bezugnahme auf die Zeichnungen.

In einer bevorzugten Ausgestaltung weist die erste Öffnung der Klippvorrichtung ein Schraubengewinde auf, wobei die Schraube beim Durchstecken durch die übereinander positionierten Öffnungen in dieses Schraubengewinde erstmals eingeschraubt wird. Beispielsweise kann dieses Schraubengewinde in Form einer Presslochmutter ausgebildet sein und in eine Bodenplatte der Klippvorrichtung eingesteckt werden. Da die Klippvorrichtung mit der Befestigungsvorrichtung über die federelastischen Bügel in eigens dafür vorgesehene Ausnehmungen der Karosserie eingeklipst wird, dient das Schraubengewinde innerhalb der Klippvorrichtung nicht notwendigerweise der Befestigung. Vielmehr dient das Schraubengewinde beim Einschrauben der Schraube dazu, die Bügel der Klippvorrichtung aufzuspreizen und damit fest an der Karosserie zu befestigen. Daher wäre auch denkbar, wenn die Befestigungsvorrichtung und hier eine der Befestigungsplatten und/oder ein Abschnitt der Karosserie zusätzlich oder alternativ ebenfalls ein Schraubgewinde aufweist.

In einer alternativen Ausgestaltung muss die Schraube beim erstmaligen Einschrauben nur solange eingeschraubt werden, bis die Befestigungsvorrichtung an der Klippvorrichtung fixiert ist. Bei einem weiteren Einschrauben wird die Schraube solange in das Schraubgewinde eingeschraubt, bis die Klippvorrichtung mit der daran befestigten Befestigungsvorrichtung an der Karosserie fest befestigt und damit fixiert ist.

Vorzugsweise wird bei dem Einschrauben der Schraube in das Schraubgewinde der Drehwinkel und/oder das Drehmoment überwacht und entsprechend ausgewertet. Dabei wird die Schraube solange in das Schraubgewinde eingeschraubt, bis ein vorgegebenes Drehmoment bzw. ein vorgegebener Drehwinkel erreicht ist. Dieses vorgegebene Drehmoment bzw. dieser vorgegebene Drehwinkel ist dabei so bemessen, dass die Bügel der Klippvorrichtung so aufgespreizt werden, dass die Klippvorrichtung und damit auch die Befestigungsvorrichtung unlösbar und sehr fest an der Karosserie bzw. der Innenverkleidung des Kraftfahrzeuges anliegen. Gleichermaßen sind diese so dimensioniert, dass das Schraubgewinde bei dem Eindrehen nicht überdreht und damit zerstört wird. Diese Überwachung des Drehwinkels bzw. des Drehmoments ist insbesondere bei dünnen Blechen, beispielsweise im Bereich von weniger als 1 mm, die somit auch nur ein geringes Schraubgewinde zulassen, sehr zweckmäßig, da hier das exakte Eindrehen der Schraube sehr wesentlich ist.

In einer ersten Ausgestaltung wird die Befestigungslasche zwischen zwei Plattenabschnitten einer Platte der Befestigungsvorrichtung eingeklemmt. In diesem Falle wirkt die Befestigungsvorrichtung bzw. deren Befestigungsplatte gewissermaßen als Klammer für die Befestigungslasche.

In einer dazu alternativen Ausgestaltung wird die Befestigungslasche zwischen einem Plattenabschnitt einer Platte der Befestigungsvorrichtung und einer Bodenplatte der Klippvorrichtung, in der auch die zweite Öffnung vorgesehen ist, eingeklemmt. In diesem Falle wirkt das Zusammenspiel dieses Plattenabschnittes mit der Bodenplatte gewissermaßen als Klammer zum Einklemmen der Befestigungslasche.

In einer Ausgestaltung der Erfindung wird für ein Austauschen des Airbags die Schraube so lange zurückgeschraubt, bis die Federelemente der Klippvorrichtung aus den Ausnehmungen der Karosserie herausgezogen werden können und die Befestigungsvorrichtung dann mit der darin eingeklemmten Befestigungslasche des Airbags wieder von der Klippvorrichtung gelöst werden kann.

In einer bevorzugten Ausgestaltung der erfindungsgemäßen Airbagbefestigungsanordnung ist die Klippvorrichtung mit einer Befestigungsplatte der Befestigungsvorrichtung einteilig ausgebildet. Beispielsweise sind hier die Klippvorrichtung bzw. die Bügel der Klippvorrichtung direkt an der Befestigungsplatte befestigt, beispielsweise aufgelötet oder aufgeschweißt.

In einer dazu alternativen Ausgestaltung sind die Klippvorrichtung und eine Befestigungsplatte der Befestigungsvorrichtung zweiteilig ausgebildet und werden erst beim Einschrauben durch die Schraube zusammengehalten.

Ausführungsbeispiele der Erfindung sind in den beigefügten schematischen Zeichnungen beispielhaft dargestellt. Es zeigen dabei:
- Fig. 1: eine perspektivische Draufsicht auf eine erfindungsgemäße Airbagbefestigungsanordnung;
- Fig. 2: einen Querschnitt durch die Airbagbefestigungsanordnung aus Fig. 1, welche an einer Karosserie befestigt ist;
- Fig. 3: einen Querschnitt einer Klippvorrichtung, wie sie bei der erfindungsgemäßen Airbagbefestigungsanordnung, aus Fig. 1 verwendet wird;
- Fig. 4a bis Fig. 4d: schematische Querschnitte zur Beschreibung des erfindungsgemäßen Verfahrens zum Befestigen eines Airbags.

In den Figuren der Zeichnung sind gleiche und funktionsgleiche Elemente und Merkmale - sofern nichts Anderes ausgeführt ist - mit denselben Bezugszeichen bezeichnet.

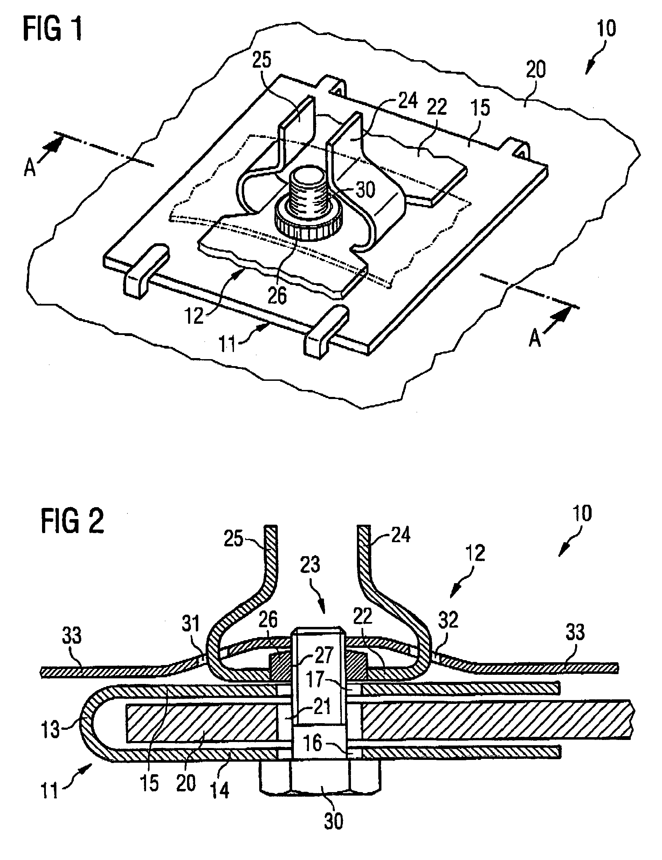

Die Fig. 1 und 2 zeigen eine Draufsicht bzw. einen Querschnitt einer erfindungsgemäßen Airbagbefestigungsanordnung, welche hier mit Bezugszeichen 10 bezeichnet ist. Die Airbagbefestigungsanordnung 10 umfasst eine Befestigungsvorrichtung 11 sowie eine Klippvorrichtung 12.

Die Befestigungsvorrichtung 11 weist eine Befestigungsplatte 13 auf, die beispielsweise als Blech ausgebildet ist. Die Befestigungsplatte 13 weist einen ersten Plattenabschnitt 14 und einen zweiten Plattenabschnitt 15 auf. Beide Plattenabschnitte 14, 15 weisen jeweils eine öffnung 16, 17 auf.

Die Befestigungsvorrichtung 11 dient dem Einklemmen und Fixieren einer Befestigungslasche 20 für einen hier nicht dargestellten Airbag. Unter einem Airbag soll hier - sofern nichts Anderes ausgeführt ist - lediglich der Luftsack zu verstehen sein, nicht allerdings das gesamte Airbag-Modul, welches eben auch ein Airbaggehäuse, den Gasgenerator und dergleichen umfasst. Die Befestigungslasche 20 weist eine Öffnung 21 auf. Die Befestigungslasche 20 ist zwischen den beiden Befestigungsplatten 14, 15 derart sandwichmäßig angeordnet, dass die Öffnung 21 der Befestigungslasche 20 in einer Flucht mit den beiden Öffnungen 16, 17 der Befestigungsplatten 14, 15 angeordnet sind. Über diese Öffnung 21 lässt sich die Befestigungslasche 20 und damit auch der Airbag mittels der Befestigungsvorrichtung 11 und der Klippvorrichtung 12, wie nachfolgend noch detailliert ausgeführt wird, an einem Teil der Karosserie 33 oder einer Innenverkleidung eines Kraftfahrzeuges befestigen.

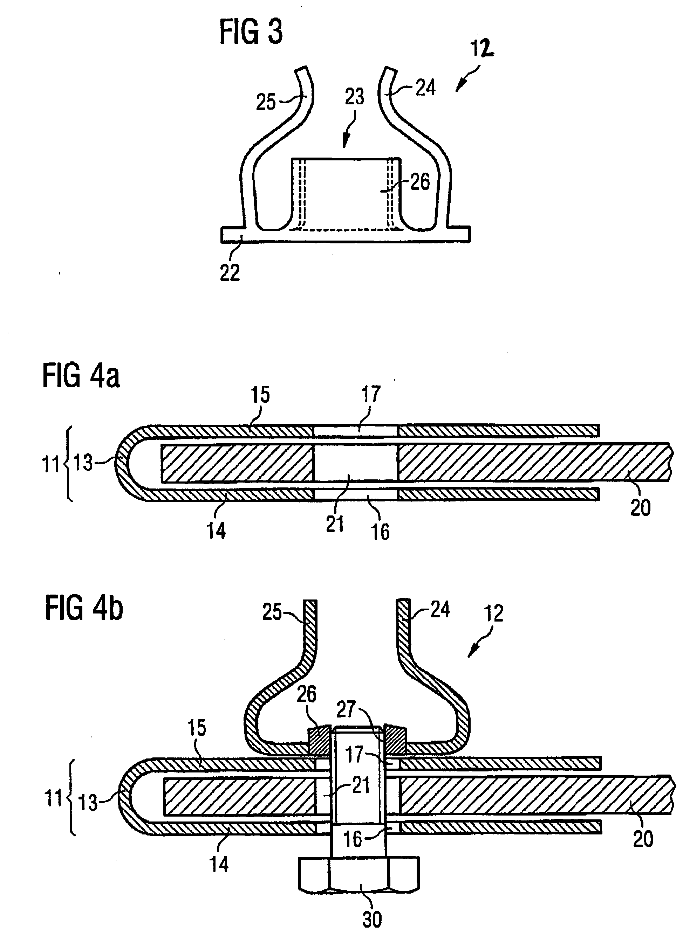

Die Klippvorrichtung 12 umfasst eine Bodenplatte 22. Die Bodenplatte 22 weist eine Öffnung auf, die in den Beispielen in den Fig. 1 und 2 im Bereich der Öffnungen 14, 15, 21 angeordnet ist, welche somit eine durchgehende Öffnung der Airbagbefestigungsanordnung 10 ausbilden. Von der Bodenplatte 22 stehen zwei bügelförmige Elemente 24, 25 ab, die federelastische Elemente bilden. Im Bereich der Öffnung 23 ist eine Presslochmutter 26 in die Bodenplatte 22 eingefügt, die ein Innengewinde 27 enthält. Der genaue Aufbau einer Klippvorrichtung ist beispielhaft in der Fig. 3 im Detail dargestellt.

Die Befestigungsanordnung 10 in den Fig. 1 und 2 umfasst ferner eine Schraube 30, die von der Seite der Befestigungsplatte 14 durch die Öffnungen 17, 21, 16, 23 durch die Befestigungsplatten 14, 15 und die Befestigungslasche 20 durchgesteckt ist und ihn das Schraubengewinde der Presslochmutter 26 der Klippvorrichtung 12 eingeschraubt wurde. Auf diese Weise wird eine feste Verbindung von Befestigungslasche 20, Befestigungsvorrichtung 11 und Klippvorrichtung 12 gewährleistet. Die Klippvorrichtung 12 kann dann, wie dies in der Figur 2 dargestellt ist, durch eigens dafür vorgesehene Ausnehmungen innerhalb eines Karosserieteils 33 des Kraftfahrzeuges eingesteckt werden. Wird die Schraube 30 dann beispielsweise bis zum Anschlag in die Presslochmutter 26 eingeschraubt, dann spreizen sich auf diese Weise die Bügel 24, 25 der Klippvorrichtung 12 auf und befestigen auf diese Weise die Klippvorrichtung 12 und die mit dieser fest verbundene Befestigungsvorrichtung 11 und Befestigungslasche 20 fest an der Karosserie 33.

Nachfolgend wird ein erfindungsgemäßes Verfahren zum Befestigen eines Airbags bzw. der Befestigungslasche des Airbags an der Karosserie eines Kraftfahrzeuges anhand der Teilfiguren 4a bis 4d näher erläutert:

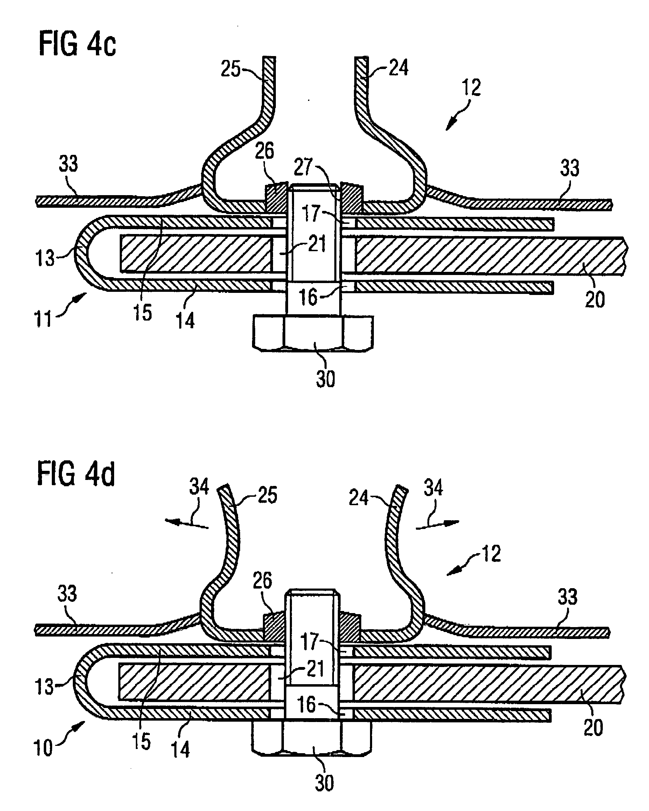

In einem ersten Verfahrensschritt (Fig. 4a) wird eine Befestigungsvorrichtung 11 bereitgestellt, deren Befestigungsplatten U-förmig, gewissermaßen sandwichmäßig eine Befestigungslasche 20 eines Airbags einklemmen. Die Öffnung 21 der Befestigungslasche 20 in einer Flucht zu den entsprechenden Öffnungen 16, 17 der Befestigungsplatten 14, 15 angeordnet.

Anschließend wird (Fig. 4b) eine Klippvorrichtung 12 derart an der Befestigungsvorrichtung 11 positioniert, dass deren an der Bodenplatte 22 vorgesehene Öffnung 21 in einer Flucht zu den Öffnungen 14, 15 der Befestigungsvorrichtung sowie der Öffnung 21 der Befestigungslasche 20 angeordnet ist. Anschließend wird von der Seite der Befestigungsplatte 14 eine Schraube 30 in die Öffnungen 16, 17, 21 durchgesteckt und etwas in das Gewinde 27 der Presslochmutter 26 eingeschraubt. Die Schraube 30 wird hier lediglich soweit eingeschraubt, dass die Klippvorrichtung 12 an der Befestigungsvorrichtung 11 mit darin eingeklemmter Befestigungslasche 20 befestigt ist.

Anschließend werden die Bügel 24, 25 der Klippvorrichtung 12 in einsprechende Ausnehmungen 31, 32 eines Karosserieteils 33 eingesteckt (Fig. 4c).

Abschließend wird die Schraube weiter in das Gewinde 27 der Presslochmutter 26 der Klippvorrichtung 12 eingedreht, wobei sich dadurch die Bügel 24, 25 durch das Eindrehen der Schraube 30 in die Richtung 34 aufspreizen und auf diese Weise die Klippvorrichtung 12 und somit auch die Befestigungsvorrichtung 11 mit darin eingeklemmter Befestigungslasche 20 fest an der Karosserie 33 befestigen.

### Bezugszeichenliste

- 10: Airbag-Befestigungsanordnung
- 11: Befestigungsvorrichtung
- 12: Klippvorrichtung
- 13: Befestigungsplatte
- 15, 15: Befestigungsplattenabschnitte
- 16, 17: Öffnungen in den Befestigungsplattenabschnitten
- 20: Befestigungslasche
- 21: Öffnung in der Befestigungslasche
- 22: Bodenplatte
- 23: Öffnung in der Bodenplatte
- 24, 25: Bügel der Klippvorrichtung
- 26: Presslochmutter
- 27: Innengewinde
- 30: Schraube
- 31, 32: Ausnehmungen in der Karosserie
- 33: Karosserie
- 34: Spreizrichtung

## Patentansprüche

1. Verfahren zum Befestigen eines Airbags an der Karosserie (33) eines Kraftfahrzeugs, mit den Schritten:
- Bereitstellen einer Klippvorrichtung (12) mit einer ersten Öffnung (23) sowie mit Federelementen (24, 25) und Bereitstellen einer Befestigungsvorrichtung (11) mit mindestens einer zweiten Öffnung (16, 17), die eine Befestigungslasche (20) eines mit einem Gas auffüllbaren Airbags einklemmt;
- Positionieren der Klippvorrichtung (12) und der Befestigungsvorrichtung (11) derart, dass die erste und die zweite Öffnung (23; 16,17) übereinander angeordnet sind;
- Durchstecken einer Schraube (30) in die übereinander positionierten Öffnungen (23; 16, 17);
- Einklipsen der Federelemente (24, 25) in einen Abschnitt der Karosserie (33), welcher Ausnehmungen (31, 32) zur Aufnahme der Federelemente (24, 25) aufweist, welche im eingeklipsten Zustand über der ersten und zweiten Öffnung angeordnet sind;
- Aufspreizen der Federelemente (24, 25) durch abschließendes Einschrauben der Schraube (30) in die Klippvorrichtung (11) und/oder die Karosserie (33).

2. Verfahren nach Anspruch 1, **dadurch gekennzeichnet, dass** die erste öffnung (23) der Klippvorrichtung (11) ein Schraubengewinde (27) enthält und die Schraube (30) beim Durchstecken in die übereinander positionierten Öffnungen (23, 16, 17) in dieses Schraubengewinde (27) erstmals eingeschraubt wird.

3. Verfahren nach Anspruch 2, **dadurch gekennzeichnet, dass** in die erste Öffnung (23) der Klippvorrichtung (11) vor dem erstmaligen Einschrauben eine Presslochmutter (26), die das Schraubgewinde (27) enthält, eingesteckt wird.

4. Verfahren nach einem der vorherigen Ansprüche, **dadurch gekennzeichnet, dass** die zweite Öffnung (16, 17) ein weiteres Schraubgewinde und/oder eine Presslochmutter, die ein weiteres Schraubgewinde enthält, aufweist.

5. Verfahren nach einem der Ansprüche 2 bis 4, **dadurch gekennzeichnet, dass** die Schraube (30) beim erstmaligen Einschrauben solange eingeschraubt wird, bis die Befestigungsvorrichtung (11) an der Klippvorrichtung (12) fixiert ist.

6. Verfahren nach einem der vorherigen Ansprüche, **dadurch gekennzeichnet, dass** die Schraube (30) beim weiteren Einschrauben solange eingeschraubt wird, bis die Klippvorrichtung (12) mit der daran befestigten Befestigungsvorrichtung (11) an der Karosserie (33) fixiert ist.

7. Verfahren nach einem der vorherigen Ansprüche, **dadurch gekennzeichnet, dass** beim weiteren Einschrauben der Schraube (30) der Drehwinkel und/oder das Drehmoment überwacht wird.

8. Verfahren nach Anspruch 7, **dadurch gekennzeichnet, dass** die Schraube (30) solange eingeschraubt wird, bis ein vorgegebenes Drehmoment bzw. ein vorgegebener Drehwinkel erreicht ist.

9. Verfahren nach einem der vorherigen Ansprüche, **dadurch gekennzeichnet, dass** die Befestigungslasche (20) zwischen zwei Plattenabschnitten (14, 15) einer Platte (13) der Befestigungsvorrichtung (11) eingeklemmt wird.

10. Verfahren nach einem der Ansprüche 1 bis 8, **dadurch gekennzeichnet, dass** die Befestigungslasche (20) zwischen einem Plattenabschnitt einer Platte der Befestigungsvorrichtung (11) und einer Bodenplatte (12) der Klippvorrichtung (12), in der die erste Öffnung (23) vorgesehen ist, eingeklemmt wird.

11. Verfahren nach einem der vorherigen Ansprüche, **dadurch gekennzeichnet, dass** für ein Austauschen des Airbags die Schraube (30) solange zurückgeschraubt wird, bis die Federelemente (24, 25) der Klippvorrichtung (12) aus den Ausnehmungen (31, 32) der Karosserie (33) herausgezogen werden können und die Befestigungsvorrichtung (11) dann mit der darin eingeklemmten Befestigungslasche (20) von der Klippvorrichtung (12)gelöst werden kann.

12. Airbag-Befestigungsanordnung (10),
- mit einer Klippvorrichtung (12), die eine Bodenplatte (22) aufweist, in der eine ein Schraubgewinde (27) aufweisende erste Öffnung (23) angeordnet ist und von der Federelemente (24, 25) abstehen,
- mit einer Befestigungsvorrichtung (11), die mindestens eine zweite Öffnung (16, 17) aufweist und mittels der eine Befestigungslasche (20) eines mit einem Gas auffüllbaren Airbags einklemmbar ist,
- mit einer Schraube (30), die in die übereinander positionierten ersten und zweiten Öffnungen (23; 16,17) durchgesteckt und in das Schraubgewinde (27) eingeschraubt ist derart, daß die Federelemente aufgespreizt sind.

13. Befestigungsanordnung nach Anspruch 12, **dadurch gekennzeichnet, dass** die erste Öffnung (23) eine Presslochmutter (26), die das Schraubgewinde (27) enthält, aufweist.

14. Befestigungsanordnung nach einem der Ansprüche 12 bis 13, **dadurch gekennzeichnet, dass** die Befestigungslasche (20) zwischen zwei gegenüberliegenden Plattenabschnitten (14, 15) einer Platte (13) der Befestigungsvorrichtung (11) eingeklemmt ist.

15. Befestigungsanordnung nach einem der Ansprüche 12 bis 13, **dadurch gekennzeichnet, dass** die Befestigungslasche (20) zwischen einem Plattenabschnitt einer Platte der Befestigungsvorrichtung (11) und einer Bodenplatte (22) der Klippvorrichtung (12), in der die erste Öffnung (23) vorgesehen ist, eingeklemmt ist.

16. Befestigungsanordnung nach einem der Ansprüche 12 bis 15, **dadurch gekennzeichnet, dass** die Klippvorrichtung (12) mit einer Befestigungsplatte (13) der Befestigungsvorrichtung (11) einteilig ausgebildet ist.

17. Befestigungsanordnung nach einem der Ansprüche 12 bis 15, **dadurch gekennzeichnet, dass** die Klippvorrichtung (12) und eine Befestigungsplatte (13) der Befestigungsvorrichtung (11) zweiteilig ausgebildet sind und durch die Schraube (30) beim Einschrauben zusammengehalten werden.

18. Airbag-Modul in oder für ein Kraftfahrzeug,
- mit einem mit einem Gas auffüllbaren Airbag, der wenigstens eine von dem Airbag abstehende Befestigungslasche (20) zur Befestigung des Airbags aufweist,
- mit wenigstens einer Airbag-Befestigungsanordnung (10) nach einem der Ansprüche 12 bis 17, wobei die Befestigungslasche (20) zum Befestigen des Airbags mittels einer Schraube (30) an der Klippvorrichtung (12) festgeschraubt ist.

19. Kraftfahrzeug,
- mit einer Karosserie (33),
- mit einer Innenverkleidung zum Verkleiden der Karosserie (33),
- mit einem Airbag-Modul nach Anspruch 18, wobei das Airbag-Modul mittels der Federelemente (24, 25) der Klippvorrichtung (12) mit der Karosserie (33) und/oder mit der Innenverkleidung verklipst ist und mittels der durch die Klippvorrichtung (12) durchgeschraubten Schraube (30) an der Karosserie (33) und/oder an der Innenverkleidung befestigt und fixiert ist.

## Claims

1. A method for fastening an airbag to the body (33) of a motor vehicle, comprising the following steps:
- providing a clip apparatus (12) with a first opening (23) and spring elements (24, 25), and providing a fastening apparatus (11) with at least one second opening (16, 17) which clamps a fixing lug (20) of an airbag that can be filled with a gas;
- positioning of the clip apparatus (12) and the fastening apparatus (11) in such a way that the first and second opening (23; 16, 17) are arranged above each other;
- inserting a screw (30) into the openings (23; 16, 17) which are positioned above each other;
- clipping of the spring elements (24, 25) into a section of the body (33) which comprises recesses (31, 32) for accommodating spring elements (24, 25), which in the clipped-in state are arranged above the first and second opening;
- spreading the spring elements (24, 25) by subsequent screwing of the screw (30) into the clip apparatus (11) and/or the body (33).

2. A method according to claim 1, **characterized in that** the first opening (23) of the clip apparatus (11) contains a screw thread (27) and the screw (30) is screwed into said screw thread (27) for the first time when inserted into the openings (23, 16, 17) positioned above each other.

3. A method according to claim 2, **characterized in that** a clamping nut (26), which contains the screw thread (27), is inserted into the first opening (23) of the clip apparatus (11) before screwing in is performed for the first time.

4. A method according to one of the preceding claims, **characterized in that** the second opening (16, 17) comprises a further screw thread and/or a clamping nut which contains a further screw thread.

5. A method according to one of the claims 2 to 4, **characterized in that** the screw (30) is screwed in during the first-time screwing in until the fastening apparatus (11) is fixed to the clip apparatus (12).

6. A method according to one of the preceding claims, **characterized in that** the screw (30) is screwed in during further screwing in until the clip apparatus (12) with the fastening apparatus (11) fastened thereto is fixed to the body (33).

7. A method according to one of the preceding claims, **characterized in that** the rotational angle and/or the torque is monitored during the further screwing in of the screw (30).

8. A method according to claim 7, **characterized in that** the screw (30) is screwed in for such a time until a predetermined torque or a predetermined rotational angle has been reached.

9. A method according to one of the preceding claims, **characterized in that** the fixing lug (20) is clamped between two plate sections (14, 15) of a plate (13) of the fastening apparatus (11).

10. A method according to one of the claims 1 to 8, **characterized in that** the fixing lug (20) is provided between a plate section of a plate of the fastening apparatus (11) and a base plate (12) of the clip apparatus (12) in which the first opening (23) is provided.

11. A method according to one of the preceding claims, **characterized in that** the screw (30) is screwed back for an exchange of the airbag for such a time until the spring elements (24, 25) of the clip apparatus (12) can be pulled out of the recesses (31, 32) of the car body (33) and the fastening apparatus (11) can then be released from the clip apparatus (12) with the fixing lug (20) clamped therein.

12. An airbag fastening arrangement (10), comprising
- a clip apparatus (12) having a base plate (22) in which a first opening (23) having a screw thread (27) is arranged and from which spring elements (24, 25) protrude;
- a fastening apparatus (11) which comprises at least one second opening (16, 17) and by means of which a fixing lug (20) can be clamped by means of an airbag that can be filled with a gas;
- a screw (30) which is inserted into first and second openings (23; 16, 17) positioned above each other and into which the screw thread (27) is screwed in such a way that the spring elements are spread apart.

13. A fastening arrangement according to claim 12, **characterized in that** the first opening (23) comprises a clamping nut (26) which contains the screw thread (27).

14. A fastening arrangement according to one of the claims 12 to 13, **characterized in that** the fixing lug (20) is clamped between two opposite plate sections (14, 15) of a plate (13) of the fastening apparatus (11).

15. A fastening arrangement according to one of the claims 12 to 13, **characterized in that** the fixing lug (20) is clamped between a plate section of a plate of the fastening apparatus (11) and a base plate (22) of the clip apparatus (12) in which the first opening (23) is provided.

16. A fastening arrangement according to one of the claims 12 to 15, **characterized in that** the clip apparatus (12) is integrally arranged with a fastening plate (13) of the fastening apparatus (11).

17. A fastening arrangement according to one of the claims 12 to 15, **characterized in that** the clip apparatus (12) and a fastening plate (13) of the fastening apparatus (11) are arranged in two parts and are held together by the screw (30) during screwing in.

18. An airbag module for a motor vehicle, comprising
- an airbag which can be filled with a gas and which comprises at least one fixing lug (20) which protrudes from the airbag and is used for fixing the airbag;
- at least one airbag fastening arrangement (10) according to one of the claims 12 to 17, wherein the fixing lug (20) is tightly screwed for fixing the airbag by means of a screw (30) to the clip apparatus (12).

19. A motor vehicle, comprising
- a car body (33);
- an interior trim for lining the car body (33);
- an airbag module according to claim 18, wherein the airbag module is clipped by means of the spring elements (24, 25) of the clip apparatus (12) to the car body (33) and/or the interior trim, and is fastened and fixed to the car body (33) and/or the interior trim by the screw (30) screwed through the clip apparatus (12).

## Revendications

1. Procédé de fixation d'un coussin gonflable de sécurité sur la carrosserie (33) d'un véhicule à moteur, comprenant les étapes de :
- préparation d'un dispositif de clipsage (12) avec une première ouverture (23) et avec des éléments de ressort (24, 25) et préparation d'un dispositif de fixation (11) avec au moins une deuxième ouverture (16, 17), qui enserre une patte de fixation (20) d'un coussin gonflable de sécurité pouvant être rempli de gaz ;
- positionnement du dispositif de clipsage (12) et du dispositif de fixation (11) de telle manière que la première ouverture et la deuxième (23 ; 16, 17) soient disposées l'une au-dessus de l'autre ;
- passage d'une vis (30) dans les ouvertures (23 ; 16, 17) superposées ;
- clipsage des éléments de ressort (24, 25) dans une partie de la carrosserie (33) qui présente des évidements (31, 32) pour recevoir les éléments de ressort (24, 25), lesquels sont disposés dans l'état clipsé par-dessus la première ouverture et la deuxième ;
- déploiement de l'éléments de ressort (24, 25) par vissage final de la vis (30) dans le dispositif de clipsage (11) et/ou la carrosserie (33).

2. Procédé selon la revendication 1, **caractérisé en ce que** la première ouverture (23) du dispositif de clipsage (11) contient un pas de vis (27) et la vis (30) est vissée une première fois dans ce pas de vis (27) lors de son passage dans les ouvertures (23, 16, 17) superposées.

3. Procédé selon la revendication 2, **caractérisé en ce qu'**un écrou tôlé (26) contenant le pas de vis (27) est inséré dans la première ouverture (23) du dispositif de clipsage (11) avant le premier vissage.

4. Procédé selon l'une des revendications précédentes, **caractérisé en ce que** la deuxième ouverture (16, 17) présente un autre pas de vis et/ou un écrou tôlé contenant l'autre pas de vis.

5. Procédé selon l'une des revendications 2 à 4, **caractérisé en ce que** la vis (30) est vissée lors du premier vissage jusqu'à ce que le dispositif de fixation (11) soit immobilisé sur le dispositif de clipsage (12).

6. Procédé selon l'une des revendications précédentes, **caractérisé en ce que** la vis (30) est vissée lors du premier vissage jusqu'à ce que le dispositif de clipsage (12) avec le dispositif de fixation (11) fixé dessus soit immobilisé sur la carrosserie (33).

7. Procédé selon l'une des revendications précédentes, **caractérisé en ce que** lors d'un nouveau serrage de la vis (30), l'angle de rotation et/ou le couple de rotation sont surveillés.

8. Procédé selon la revendication 7, **caractérisé en ce que** la vis (30) est serrée jusqu'à ce qu'un couple prédéterminé ou un angle de rotation prédéterminé soit atteint.

9. Procédé selon l'une des revendications précédentes, **caractérisé en ce que** la patte de fixation (20) est serrée entre deux parties de plaque (14, 15) d'une plaque (13) du dispositif de fixation (11).

10. Procédé selon l'une des revendications 1 à 8, **caractérisé en ce que** la patte de fixation (20) est serrée entre une partie de plaque d'une plaque du dispositif de fixation (11) et une plaque de fond (12) du dispositif de clipsage (12) dans laquelle est prévue la première ouverture (23).

11. Procédé selon l'une des revendications précédentes, **caractérisé en ce qu'**afin de remplacer le coussin gonflable de sécurité, la vis (30) est desserrée jusqu'à ce que les éléments à ressort (24, 25) du dispositif de clipsage (12) puissent être retirés des évidements (31, 32) de la carrosserie (33) et que le dispositif de fixation (11) puisse ensuite être détaché du dispositif de clipsage (12) avec la patte de fixation (20) serrée dedans.

12. Dispositif de fixation pour coussin gonflable de sécurité (10),
- avec un dispositif de clipsage (12) qui présente une plaque de fond (22) dans laquelle est disposée une première ouverture (23) présentant un pas de vis (27) et de laquelle dépassent les éléments de ressort (24, 25),
- avec un dispositif de fixation (11) qui présente au moins une deuxième ouverture (16, 17) et qui peut être serré au moyen d'une patte de fixation (20) d'un coussin gonflable de sécurité pouvant être rempli avec un gaz,
- avec une vis (30) qui est enfilée dans les première et deuxième ouvertures (23 ; 16,17) superposées et serrée dans le pas de vis (27) de telle manière que les éléments de ressort soient déployés.

13. Arrangement de fixation selon la revendication 12, **caractérisé en ce que** la première ouverture (23) présente un écrou tôlé (26) qui contient le pas de vis (27).

14. Arrangement de fixation selon l'une des revendications 12 à 13, **caractérisé en ce que** la patte de fixation (20) est serrée entre deux parties de plaque (14, 15) opposées d'une plaque (13) du dispositif de fixation (11).

15. Arrangement de fixation selon l'une des revendications 12 à 13, **caractérisé en ce que** la patte de fixation (20) est serrée entre une partie de plaque d'une plaque du dispositif de fixation (11) et une plaque de fond (22) du dispositif de clipsage (12) dans lequel la première ouverture (23) est prévue.

16. Arrangement de fixation selon l'une des revendications 12 à 15, **caractérisé en ce que** le dispositif de clipsage (12) est formé d'un seul tenant avec une plaque de fixation (13) du dispositif de fixation (11).

17. Arrangement de fixation selon l'une des revendications 12 à 15, **caractérisé en ce que** le dispositif de clipsage (12) et une plaque de fixation (13) du dispositif de fixation (11) sont formés de deux parties et sont retenus ensemble par la vis (30) lors du vissage.

18. Module de coussin gonflable de sécurité dans ou pour un véhicule à moteur,
- avec un coussin gonflable de sécurité pouvant être rempli de gaz qui présente au moins une patte de fixation (20) dépassant du coussin gonflable de sécurité pour fixer le coussin gonflable de sécurité,
- avec au moins un dispositif de fixation pour coussin gonflable de sécurité (10) selon l'une des revendications 12 à 17, dans lequel la patte de fixation (20) est vissée sur le dispositif de clipsage (12) au moyen d'une vis (30) pour fixer le coussin gonflable de sécurité.

19. Véhicule à moteur
- avec une carrosserie (33),
- avec un habillage intérieur tapissant la carrosserie (33),
- avec un module de coussin gonflable de sécurité selon la revendication 18, lequel module de coussin gonflable de sécurité est clipsé sur la carrosserie (33) et/ou sur l'habillage intérieur au moyen des éléments de ressort (24, 25) du dispositif de clipsage (12) et fixé et immobilisé sur la carrosserie (33) et/ou sur l'habillage intérieur au moyen de la vis (30) vissée à travers le dispositif de clipsage (12).
